# EUROPEAN PATENT APPLICATION

(11) **EP 1 708 514 A2**
(43) Date of publication of application: **04.10.2006**
(21) Application number: 06112005.1
(22) Date of filing: 30.03.2006
(51) Int. Cl.: H04N 9/68

(54) **A color clone technology for video color enhancement**

(30) Priority: 31.03.2005 CN 200510056251
(71) Applicant: ASUSTeK Computer Inc., Peitou, Taipei City (TW)
(72) Inventor: Lin, Wei-Po, TAIPEI (TW); Kuo, Chih-Chia, Taipei (TW); Lee, Shih-Chun, Taipei (TW)
(74) Representative: Viering, Hans-Martin

(57) **Abstract**

A processing apparatus has a video signal receiver, a color enhancement filter and a video signal renderer. The video signal receiver is arranged to receive a video signal. The color enhancement filter is arranged to adjust the video signal according to a color parameter table. The display effect of the adjusted video signal displayed on a selected display is nearly identical to the display effect of the original video signal displayed on a reference display. The video signal renderer is arranged to render a video image from the adjusted video signal.

## Description

### BACKGROUND

### Field of Invention

The present invention relates to a method and apparatus for processing video signals.

### Description of Related Art

As display systems with multimedia display interfaces develop abundantly, the color display performance has become the criterion by which to distinguish the products. The display systems are generally related to those kinds of products that are fully or partially supporting the TV signal displaying, the computer interface, or the web browser functions. The products are composed of display chips, display interfaces or other relevant image processing units, for example, laptop computers, barebones, smart phones, PDAs and digital TVs, etc.. And the display mechanisms can be LCD display panels, cathode-ray tube displays or other kinds of display devices.

The color-enhanced modules of traditional display systems usually use specific algorithms to enhance the color by adjusting the parameters of contrast, color temperature, hue and saturation. In order to be suitable for different operating systems and application software, the traditional technologies just enhance the color by image processing and ignore the final color display characteristics of different display systems (display systems comprise video chips, display interfaces or other relevant image processing units), but it is usually improper to assume unilaterally that the display system works according to a color coding/decoding standard. Furthermore, different users subjectively prefer different color settings; thus, a display system working according to a certain color coding/decoding standard can not satisfy everyone, and the conventional color-enhanced mechanism without expansion and multiplicity cannot supply more choices for users.

### SUMMARY

This present invention is very different from the prior art that merely deals with the source of image signals. The invention directly obtains and analyzes the color distribution characteristics of various reference display systems by reverse engineering, and refers to the color display characteristics of different display systems to make each different display system have its own optimal display effect. This invention can deal with a specific video frame only (no matter whether the window is of RGB or YUV mode) without affecting other video frames. This invention can be implemented merely by software and without adding extra hardware. Furthermore, the processing apparatus in the form of software has the functions of adjustment, modification, and updating by the Internet or other media; thus, the processing apparatus can help users to find their own favorite color tones under different situations.

It is therefore an aspect of the present invention to provide a mechanism to simulate specific color distributions of different reference display systems, and enable the display interface of the primitive display system (hereinafter the primitive display interface) to display the displaying effects of different reference display systems by option. Therefore, this mechanism can improve the display effect of the video signal displayed on the display system, and increase flexibility and selectivity for users under different conditions.

According to a preferred embodiment of the present invention, this processing method comprises building a color parameter table according to color display characteristics of a reference display system and the primitive display system; receiving a video signal, and adjusting the video signal according to the color parameter table, wherein the display effect of the adjusted video signal displayed on the primitive display system is similar to the display effect of the video signal displayed on the reference display system; and transmitting the adjusted video signal to the primitive display system.

It is another aspect of the present invention to provide a video signal processing apparatus for a display system, which can improve the color performance of the display system, decrease the inventory stress of manufacturers, and offer easy functionality of adjustment, modification and updating.

According to a preferred embodiment of the present invention, the processing apparatus comprises a video signal receiver, a color enhancement filter and a video signal processor. The video signal receiver is arranged to receive the serial video signals of movies or images. The color enhancement filter is arranged to adjust the video signal according to the color parameter table. The display effect of the adjusted video signal displayed on the primitive display system is similar to the display effect of the video signal displayed on a reference display system. The video signal processor is arranged to process the adjusted video signal to obtain a video image.

### BRIEF DESCRIPTION OF THE DRAWINGS

The invention can be more fully understood by reading the following detailed description of the preferred embodiment with reference made to the accompanying drawings as follows:
Fig. 1 is a flow chart of the measuring stage according to one preferred embodi ment;
Fig. 2 is a flow chart of the training stage according to one preferred embodiment of this invention;
Fig. 3 is a functional block diagram of the processing apparatus according to one preferred embodiment of this invention; and
Fig. 4 is a framework description of the color enhanced technology and its update mechanism according to one preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

The present invention records the color display characteristics of the reference display system and the primitive display system, respectively. The adjusted video signal can display on the primitive display interface for showing the similar effect of the reference display system according to the color characteristics. And the adjusting method can utilize a software technique to achieve so as the invention can reduce the hardware expense, the inventory stress of manufacturers, and also by the software technique, the invention is easily adjusting, modification, or upgrating the adjusting content.

The reference display systems of this invention can be LCD TVs, plasma TVs or other kinds of high quality display systems. Generally speaking, a reference display system with its own individual display effect here can be tuned by a specific company (such as Sony, Toshiba, or Sharp, etc.).

The preferred embodiment of this invention has three stages of its method as: a measuring stage, a training stage and an executing stage. The objective of the measuring stage is to measure and record the color distribution and color display characteristics of different display systems; the objective of the training stage is to build up the color parameter table; the objective of the executing stage is to simulate and enhance the color of video signals according to the color parameter table. Therefore, when the user watches the color enhanced video signal, the preferred embodiment merely searches out the corresponding relationship in the color parameter table without extra calculation during the executing stage.

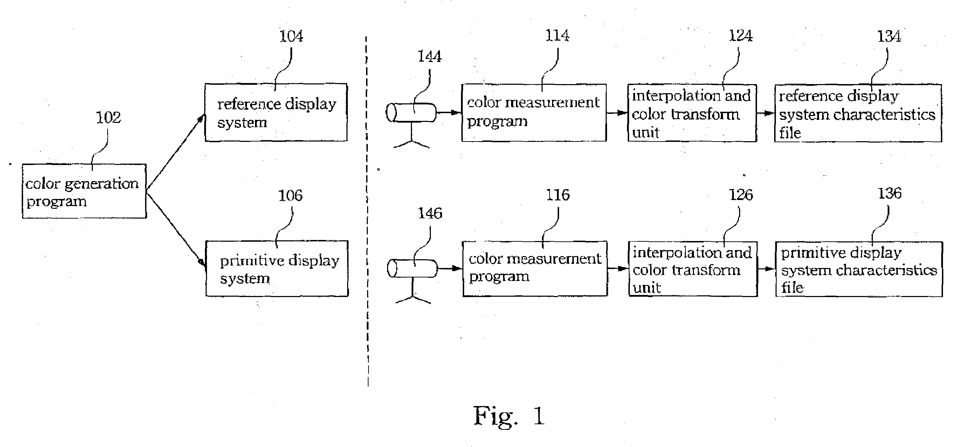

Fig. 1 is a flow chart of the measuring stage according to one preferred embodiment of the present invention. In the measuring stage, the step 102 is using a color generation program to generate different color blocks, the step 104 is displaying the color blocks on the reference display system, and the step 106 is displaying the color blocks on the primitive display system (step 106). Afterwards, the color measurement programs 144 and 146 separately obtain the color display characteristics (such as chroma values) of the reference display system and the primitive display system, and then the step 114 and 116 are measuring and calculating the color characteristics. The steps 124 and 126 are processing the measured chroma values by interpolation and color transform units, and thus the steps 134 and 136 are generating a reference display system characteristics files and a primitive display system characteristics files, respectively.

The interpolation and color transform units include linear and nonlinear three-dimensional interpolation algorithms and the algorithms relative to the mapping from the device-dependent color space (such as RGB) to the device-independent color space (such as XYZ, Lab, and etc). The color space is for example: Gamut space. The display system characteristics file records the essential information for describing all the color characteristics of the display system, such as the largest color gamut, color temperatures and gamma curves of the display system.

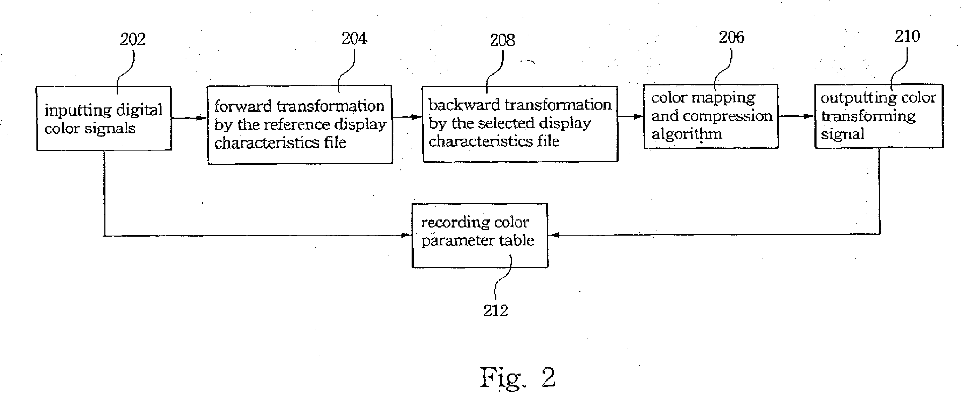

Fig. 2 is a flow chart of the training stage according to one preferred embodiment of this invention. The objective of the training stage is to build up the color parameter table. After the display system characteristics files are built up according to the reference display system and the primitive display system, the step 202 is designing various combinations of digital color signals for inputting to the training stage. The step 204 is a forward transformation of the digital color signals by the reference display characteristics file, and the step 208 is a backward transformation of the digital color signal by the primitive display characteristics file. The step 210 is outputting these digital color transforming signals, and the step 212 is recording the corresponding relationship between inputting and outputting digital color signals into the color parameter table. During the above procedure, the step 206 is re-calculating the unmapping between the forward transformation and the backward transformation of the digital color signal by color mapping and compression algorithms to obtain an optimal approximate corresponding relationship.

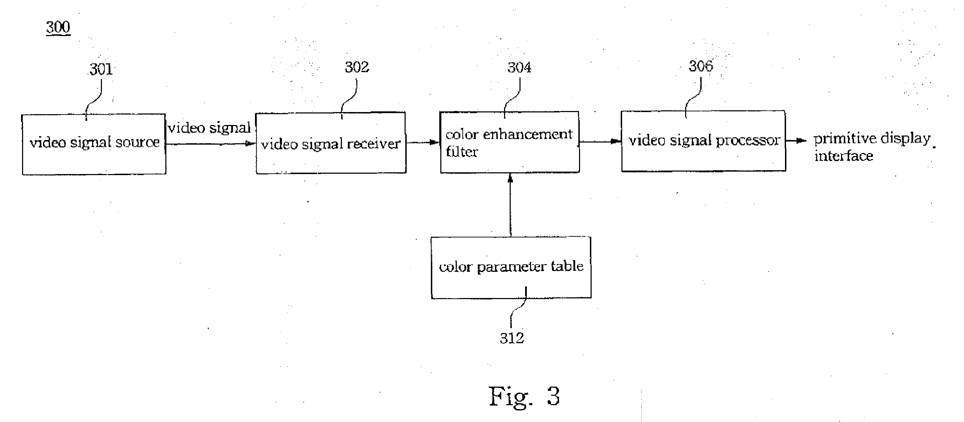

The executing stage is illustrated in Fig. 3. Fig. 3 is a block diagram of the processing apparatus according to one preferred embodiment of this invention. The processing apparatus 300 includes a video signal receiver 302, a color enhancement filter 304, and a video signal processor 306. The video signal receiver 302 is arranged to receive a video signal from the video signal source 301. The color enhancement filter 304 is arranged to adjust the video signal according to a color parameter table 312. The display effect of the adjusted video signal displayed on the primitive display system is similar to the display effect of the video signal displayed on a reference display system. The video signal processor 306 is arranged to process the adjusted video signal to obtain a video image.

The adjusting step can be achieved by attaching the color enhancement filter 304 to a driver of the primitive display system for real-time adjusting the video signal. Specifically, in this preferred embodiment, the color enhancement filter 304 is designed by the DirectShow API (Application Programming Interface), using the Intel MMX (Multi Media Extension) instruction set and the available hardware resource (such as frame buffer lookup table, overlay buffer lookup table) to speed up the transforming efficiency, thus improving the image quality over 30 fps and 720x576. Furthermore, a hook mechanism, DirectShow VMR7 or VMR9 (Video Mixing Render), can be designed to intercept the video program (such as Media player, DVD player) performed on the Windows platform, whereby attaching the color enhancement filter 304 to the video program directly.

The previous preferred embodiment is adjusting the video signal firstly by analog means and then by digital means. This two-phase adjusting manner can firstly adjust the video signals to obtain the approximate effect of reference display interface by the analog control items (such as brightness, contrast, and color temperature) provided from the reference display interface, and then make a fine adjustment by digital means with the color enhancement filter 304 (such as adjusting the value of pixel data). By the two-phase adjusting manner, the displayed colors, which are distortion due to the color signal mapping process by the color enhancement filter 304, can be reduced.

In addition, by the available hardware resource accompanying the software, the preferred embodiments have the advantages that the prior art do not have by hardware alone. In other words, the preferred embodiments can only process a specific video frame (no matter whether the window is of RGB or YUV mode) without affecting other video frames. For example: Portable computers or barebones usually display the video image and the non-video image of other system operating interface at the same time and the hardware can only enhances the all images color due to the hardware cannot distinguish the video image and the non-video image, thus consequently seriously distorting will happened on the non-video image.

A person skilled in the art should understand that this present invention can deal with a specific video frame only without affecting other video frames. Moreover, it will not increase hardware design cost. The conventional digital processing apparatus not only increases the cost of manufacturing but also seriously complicates the connecting between the DSP I/O (Digital Signal Processing Input/Output) interface and the video chip. The preferred embodiment could use the popular high-speed central processing interface and fast-access memory and bus, such as DDR (Double Data Rate) memory and PCI-E (Peripheral Component Interconnect-Express, to replace the expensive and complicated processing apparatus of digital video signals in the prior art.

Furthermore, since the preferred embodiment is implemented by software, the color enhancement modes corresponding to different reference display systems can be downloaded from the Internet or other ways. By comparing with the conventional color enhanced technologies, the preferred embodiment make it available for users to get their own favorite color under various situations by the extendable and convenient color enhanced mechanism, which database can be extend and update.

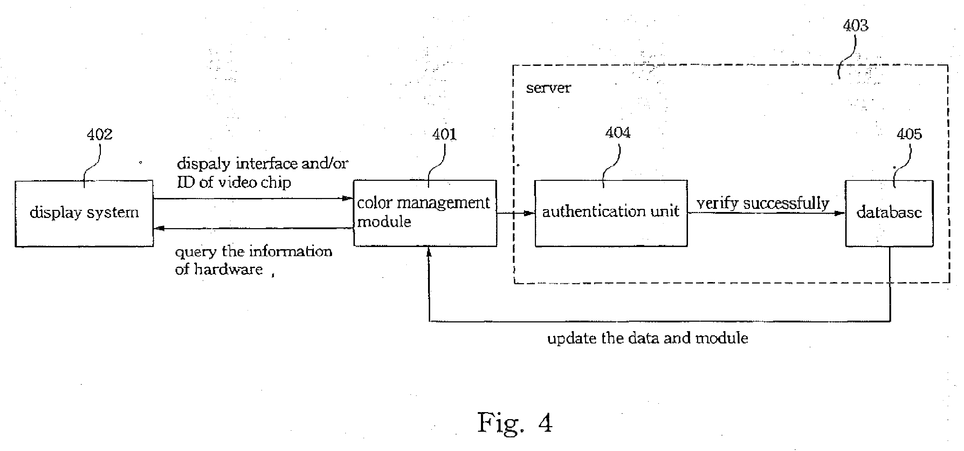

Fig. 4 is a framework description of the color enhanced technology and its update and authentication mechanism according to one preferred embodiment of this invention. A display system 402 (such as a personal computer, a portable computer, or a PDA) is queried by a color management module 401 to get the identification code (ID) of relative hardware, for example, the ID of the LCD panel interface and/or the VGA video chip. The color management module 401 then transmits the ID to a server 403 by the Internet or other ways, and an authority verification unit 404 of the server 403 verifies the authority of the ID. If the verification is permitted, the ID is transmitted to a database 405 to compare and an appropriate updating data and module is transmitted back to the color management module 401. Finally, the color management module 401 is arranged to apply the updating data and module to the display system 402.

The device-dependent color (DDC) of the operation system in the reference display system and the primitive display system, the DDC of the video chip and the DDC of the display interface, all of these have to be considered simultaneously to complete the previous adjusting steps. Therefore, the system manufacturers at the consumer end are more suitable and able to have the invention to optimize the display effect of video signals for their products (such as portable computers, barebones, smart phones, PDAs or digital TVs) than the display interface manufacturers, video chip manufacturers, operation system suppliers and video software suppliers at the vender end.. Furthermore, by achieving with the software form, the processing apparatus has the functions of adjustment, modification, and updating by the Internet or other media, and therefore makes the users available to have more choices of display effects under different situations.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A processing method of video signals for a primitive display system, the processing method comprising the steps of:
receiving a video signal;
adjusting the video signal, wherein the display effect of the adjusted video signal displayed on the primitive display system is similar to the display effect of the video signal displayed on a reference display system; and
transmitting the adjusted video signal to the primitive display system for showing on a display interface of the primitive display system.

2. The processing method of claim 1, wherein the adjusting step comprises attaching a color enhancement filter to a driver of the primitive display system for real-time adjusting the video signal.

3. The processing method of claim 1, wherein the adjusting step comprises adjusting the video signal according to a color parameter table.

4. The processing method of claim 3, further comprising:
obtaining color display characteristics of the reference display system and the primitive display system;
generating a reference display characteristics file and a primitive display characteristics file according to the color display characteristics;
calculating a corresponding relationship between a forward transformation of a color signal processed by the reference display characteristics file and a backward transformation of the color signal processed by the primitive display characteristics file, and recording the corresponding relationship into the color parameter table.

5. A processing method of video signals for a primitive display system, the processing method comprising the steps of:
building a color parameter table according to color display characteristics of a reference display system and the primitive display system;
receiving a video signal;
adjusting the video signal according to the color parameter table, wherein the display effect of the adjusted video signal displayed on the primitive display system is similar to the display effect of the video signal displayed on the reference display system; and
transmitting the adjusted video signal to the primitive display system.

6. The processing method of claim 5, wherein the color parameter table is updateable.

7. The processing method of claim 5, further comprising
downloading different color parameter tables corresponding to different reference display systems from the Internet.

8. The processing method of claim 5, wherein the color parameter table comprises color space transformation parameters of the video signal between the reference display system and the primitive display system.

9. The processing method of claim 5, wherein the color display characteristics of the reference display system and the primitive display system are obtained by a color analyzer.

10. The processing method of claim 5, wherein the adjusting step comprises attaching a color enhancement filter to a driver of the primitive display system for real-time adjusting the video signal.

11. A video signal processing apparatus used for a primitive display system, the video signal processing apparatus comprising:
a video signal receiver arranged to receive a video signal;
a color enhancement filter arranged to adjust the video signal according to a color parameter table, wherein the display effect of the adjusted video signal displayed on the primitive display system is similar to the display effect of the video signal displayed on a reference display system; and
a video signal processor arranged to process the adjusted video signal to generate a video image.

12. The video signal processing apparatus of claim 11, wherein the color parameter table comprises color space transformation parameters of the video signal between the reference display system and the primitive display system.

13. The video signal processing apparatus of claim 11, wherein the reference display system comprises a cathode-ray tube display.

14. The video signal processing apparatus of claim 11, wherein the color enhancement filter is attached in a driver of the primitive display system for real-time adjusting the video signal.

15. The video signal processing apparatus of claim 11, wherein the color enhancement filter is arranged to adjust the video signal firstly by analog means and then by digital means.

16. The video signal processing apparatus of claim 11, wherein the video signal receiver, the color enhancement filter, and the video signal processor are configured in a computer system.

17. The video signal processing apparatus of claim 11, wherein the color enhancement filter is attached on a video program by a hook mechanism.

18. The video signal processing apparatus of claim 11, wherein the adjusted video signal is transmitted to the primitive display system for showing on a display interface of the primitive display system.
